# EUROPÄISCHE PATENTSCHRIFT

(11) **EP 4 370 801 B1**
(45) Veröffentlichungstag und Bekanntmachung des Hinweises auf die Patenterteilung: **02.09.2026**
(21) Anmeldenummer: 22743816.5
(22) Anmeldetag: 13.07.2022
(51) Int. Cl.: F04D 17/10, B33Y 80/00, F04D 29/22

(54) **LEICHTBAU-HYDRAULIKDESIGN FÜR VERBESSERTE 3D-DRUCKBARKEIT**
LIGHTWEIGHT HYDRAULICS DESIGN FOR IMPROVED 3D PRINTABILITY
CONCEPTION HYDRAULIQUE LÉGÈRE POUR UNE IMPRIMABILITÉ 3D AMÉLIORÉE

(30) Priorität: 15.07.2021 DE 102021118384
(43) Veröffentlichungstag der Anmeldung: 22.05.2024
(73) Patentinhaber: KSB SE & Co. KGaA, 67227 Frankenthal (DE)
(72) Erfinder: JANJIC, Boris, 67227 Frankenthal (DE); LANG, Sebastian, 67227 Frankenthal (DE)
(86) Internationale Anmeldenummer: PCT/EP2022/069556
(87) Internationale Veröffentlichungsnummer: WO 2023/285510

(56) Entgegenhaltungen:
- EP-B1- 0 288 500
- EP-B1- 0 797 735
- CN-A- 106 678 077

## Beschreibung

Die Erfindung betrifft eine Kreiselpumpe mit einer Schaufelanordnung, wobei die Schaufelanordnung eine Trägereinheit aufweist, auf der Schaufeln angeordnet sind.

Die zentrale Komponente einer Kreiselpumpe ist das Laufrad. Ein Laufrad ist ein rotierendes und mit Schaufeln besetztes Bauteil einer Strömungsmaschine, beispielsweise einer Kreiselpumpe. Hier wird durch Strömungsumlenkung an den Schaufeln mechanische Leistung in Förderleistung umgesetzt.

Nach dem Verlauf der Flusslinien im Laufrad kann die Einteilung der Laufräder in verschiedene Laufradformen, wie beispielsweise Radialrad, Halbaxialrad, Axialrad und Peripheralrad erfolgen.

Zur Aufnahme der Schaufeln besitzen alle Laufräder eine Tragscheibe und bei geschlossenen Laufrädern auch eine Deckscheibe. Fehlt bei einem Laufrad die vordere oder äußere Deckscheibe, so gilt das Laufrad als offen.

Aufgrund ihrer besonderen Geometrie konnten geschlossene Laufräder für Pumpen weitestgehend nur durch Urformen, insbesondere im Gussverfahren, hergestellt werden. Das Urformen ist eine Hauptgruppe von Fertigungsverfahren, bei denen aus einem formlosen Stoff ein fester Körper hergestellt wird, der eine geometrisch definierte Form hat. Urformen wird genutzt, um die Erstform eines festen Körpers herzustellen und den Stoffzusammenhalt zu schaffen.

Das Gießen von Metallen und Legierungen ist ein Fertigungsverfahren, bei dem Werkstücke aus flüssigem Metall hergestellt werden. Beim Formguss-Verfahren wird die Schmelze in eine Hohlform gefüllt, in der sie anschließend erstarrt. Die Innenfläche der Hohlform ist das Negativ der Außenfläche des Gussstücks.

Die DE 10 2015 212 203 A1 beschreibt ein solches Laufrad aus einem metallischen Guss. Dabei sind die Schaufeln in Bündeln angeordnet, die mit einem besonders abrasionsbeständigen Metallguss in einer speziellen Gussform erzeugt werden.

Doch dieses Verfahren kann zu kleineren Mängeln in oder an der Oberfläche des Materials sowie zu geringfügigen geometrischen Abweichungen führen. Auch sind der Qualität der Oberflächenbeschaffenheit Grenzen gesetzt. Dies kann die Leistung des Laufrads beeinträchtigen, sodass unter Umständen Nachbearbeitungen wie umfangreiches Auswuchten oder eine Oberflächenbehandlung notwendig werden. Zudem weisen Gusslaufräder eine hohe Masse auf und können sich in der Verwendung in Pumpen träge verhalten.

Die DE 10 2016 205 976 A1 beschreibt ein leichtes, nicht träges Laufrad aus Aluminium. Metalle wie Aluminium, die bevorzugt im Leichtbau Einsatz finden, weisen im Punkt Trägheit Vorteile gegenüber Laufrädern aus Guss auf, jedoch sind sie meist nicht in dem Maße abrasions- und korrosionsbeständig.

Das Material Kunststoff bietet oft korrosionsbeständige Eigenschaften und ist gleichzeitig im Betriebsverhalten nicht träge. In der DE 10 2014 226 525 A1 wird ein Laufrad aus einer leichten Polymermatrix beschrieben. Jedoch sind Kunststoffe im Vergleich zu Gusswerkstoffen wesentlich weicher und wenig abrasionsbeständig.

Die CN 106 678 077 A beschreibt ein Laufrad mit poröser Struktur, das eine Radscheibe und Schaufeln, die an der Radscheibe befestigt sind, umfasst, wobei der innere Teil der Radscheibe als poröse Struktur ausgebildet ist.

Die EP 0 288 500 B1 zeigt ein Laufrad mit einer Vielzahl von Hilfsschaufeln auf der Einlass- und Wellenseite, wobei durch Vorsprünge Taschen ausgebildet werden.

Die EP 0 797 735 B1 offenbart eine Kreiselpumpe mit einem Laufrad, wobei ein Teil eines Gewindes mit Kunststoff gefüllt ist und der im Gewinde angeordnete Kunststoff mit dem Kunststoff des Laufradteiles einteilig ausgebildet ist.

Aufgabe der Erfindung ist es eine Kreiselpumpe mit einer Schaufelanordnung anzugeben, die beständig gegen Abrasion sowie Korrosion ist und dabei gleichzeitig ein nicht träges Betriebsverhalten aufweist. Dabei soll die Schaufelanordnung einfach, kostengünstig und schnell erzeugt werden können. Weiterhin soll die Schaufelanordnung besonders leicht sein und dennoch optimale Strömungskonturen aufweisen.

Diese Aufgabe wird erfindungsgemäß durch eine Kreiselpumpe mit einer Schaufelanordnung und ein Verfahren zu dessen Herstellung gelöst. Bevorzugte Varianten sind den Unteransprüchen, der Beschreibung und den Zeichnungen zu entnehmen.

Erfindungsgemäß weist die Schaufelanordnung Zelleinheiten auf, die Hohlräume umschließen. Diese Zelleinheiten werden von abrasions- und korrosionsbeständigen Wänden gebildet.

Eine Schaufelanordnung im Sinne der Erfindung ist bevorzugt als Laufrad oder als Leiteinrichtung ausgeführt.

Zelleinheiten sind Elemente bzw. Segmente eines Musters aus flächig angeordneten, von begrenzenden Wänden umschlossenen Hohlräumen. Vorteilhafterweise sind die Zelleinheiten lückenlos aneinander angeordnet und weisen dabei ein günstiges Verhältnis von Wandmaterial zu Volumen auf. Die Zelleinheiten eignen sich hervorragend für Leichtbau-Konstruktionen, die gleichzeitig stabilisierend ausgebildet sind. Eine Zelleinheit bzw. ein Segment ist ein Teil eines Ganzen und somit ergibt das Zusammensetzen, insbesondere das Zusammenaufbauen, von Segmenten bzw. Zelleinheiten eine ganze Schaufelanordnung.

Ein Hohlraum ist ein mathematisches, physikalisches bzw. technisches Objekt, das ein Volumen aufweist. Ein in einer Struktur eingeschlossenes Volumen, beispielsweise durch Zelleinheiten, kann ein Hohlraum sein. Dabei verändert die Existenz von Hohlräumen oft die umliegende Struktur hinsichtlich Festigkeit, Masse und Elastizität.

Gemäß der Erfindung sind die Zelleinheiten unmittelbar nebeneinander angeordnet, wodurch eine Schaufelanordnung mit hoher Festigkeit ohne Lücken entsteht. Dies ist insbesondere vorteilhaft, da abrasiven Fluiden keine Angriffsfläche an unterbrochenen Wänden und/oder Lücken von Zelleinheiten geboten wird.

Idealerweise teilen sich unmittelbar nebeneinander angeordnete Zelleinheiten gemeinsam Wände. Dies führt zu einer besonders stabilen und gleichzeitig äußerst leichten Ausgestaltung einer Schaufelanordnung.

Eine Wand im erfindungsgemäßen Sinne bezeichnet ein flächenmäßiges Gebilde, das einen Hohlraum abgrenzt. Durch eine strömungsoptimierte Anordnung in Kombination mit einer konstruktiv optimierten Anordnung von Wänden wird eine äußerst stabile Schaufelanordnung erzielt, die hinsichtlich der Strömungskontur optimal gestaltet ist und dabei auf ein Minimum an Masse reduziert ist. Bei der Ausbildung der Schaufelanordnung wird dadurch ein Maximum an Werkstoffmaterial im Vergleich zu konventionellen Schaufelanordnungen, die durch Guss erzeugt werden, eingespart.

Vorzugsweise bilden die Zelleinheiten eine wabenartige Struktur der Schaufelanordnung. Die Waben können dabei rund, eckig und/oder trapezförmig ausgebildet sein. Sie sind direkt nebeneinander angeordnet und können ideal nach den Ergebnissen einer Strömungs- und Konstruktionsoptimierung ausgebildet sein. Die Wabenstruktur bildet die Basis der als Leichtbau-Konstruktion ausgebildeten Schaufelanordnung.

Erfindungsgemäß umschließen die Wände der Zelleinheiten die Hohlräume vollständig. Die so ausgebildete Schaufelanordnung weist vorzugsweise keine offen zugänglichen Hohlräume auf, die eine Fluidströmung und das Trägheitsverhalten der Schaufelanordnung negativ beeinflussen könnten. Die Strömungskontur der Schaufelanordnung für Kreiselpumpen wird hierdurch optimal ausgestaltet.

In einer alternativen Variante der Erfindung umschließen nicht alle Wände der Zelleinheiten die Hohlräume vollständig. Dies ist insbesondere bei Leiteinrichtungen, vorzugsweise bei Leiträdern, vorteilhaft zur Ausbildung von strömungsführenden und/oder strömungsleitenden Zelleinheiten, wodurch der Wirkungsgrad der Kreiselpumpe insgesamt vorteilhaft beeinflusst wird.

Vorzugsweise sind alle Wände der Zelleneinheiten von der Trägereinheit und den Schaufeln sowie gegebenenfalls von der Deckscheibe einstückig ausgebildet. Die Einstückigkeit wird durch ein generatives Fertigungsverfahren erzielt, wodurch sich besonders schnell und präzise Wände, die Hohlräume umschließen, ausbilden lassen.

In einer weiteren Variante der Erfindung sind die Wände der Zelleinheiten, der Trägereinheit und der Deckscheibe mehrstückig ausgeführt. In einer solchen Ausführungsvariante sind die Wände der Zelleinheiten der Schaufeln generativ auf einer konventionell gefertigten Tragscheibe aufgebracht. Dadurch können individuell angeordnete und designte Schaufeln auf einer in Massenfertigung erzeugten Tragscheibe aufgedruckt und spezielle, kundenspezifische Anforderungen berücksichtigt werden. Aufgrund der Leichtbau-Konstruktion der Schaufeln erscheint die Trägheit des gesamten Laufrads deutlich geringer als bei vollständig massiv ausgeführten Laufrädern.

Bei einer Variante der Erfindung sind alle Wände der Zelleinheiten von der Trägereinheit und den Schaufeln mehrstückig und/oder in einer Hybridbauweise ausgebildet.

Die Schaufelanordnung, in aus Zelleinheiten bestehender Leichtbau-Konstruktion, wird erfindungsgemäß mit einem generativen Fertigungsverfahren erzeugt. Die Bezeichnung generatives Fertigungsverfahren umfasst alle Fertigungsverfahren, bei denen Material Schicht für Schicht aufgetragen wird und somit dreidimensionale Bauteile, insbesondere Laufräder und/oder Leiteinrichtung, erzeugt werden. Dabei erfolgt der schichtweise Aufbau computergesteuert aus einem oder mehreren flüssigen oder festen Werkstoffen nach vorgegebenen Maßen und Formen. Beim Aufbau finden physikalische oder chemische Härtungs- oder Schmelzprozesse statt. Typische Werkstoffe für das "3D-Drucken" sind Kunststoffe, Kunstharze, Keramiken, Metalle, Carbon- und Graphitmaterialien.

Gemäß der Erfindung ist die Schaufelanordnung für eine Kreiselpumpe generativ gefertigt ausgebildet. Für die Ausbildung der Zelleinheiten und Wände der Schaufelanordnung werden insbesondere das selektive Laserschmelzen und das Cladding, auch bekannt als Auftragsschweißen, angewandt. In einer alternativen Variante der Erfindung ist auch das Kaltgasspritzen und das Extrudieren in Kombination mit dem Auftragen von schmelzfähigem Kunststoff ein anwendbares Verfahren.

Beim Auftragsschweißen oder Cladding werden die Zelleinheiten der Schaufelanordnung nach einem Verfahren hergestellt, das eine Grundstruktur durch Schweißen beschichtet. Das Auftragsschweißen baut dabei durch einen Schweißzusatzwerkstoff in Form von einem Draht oder einem Pulver ein Volumen auf, das eine besonders filigrane und strömungsoptimierte Form der Schaufelanordnung realisiert.

Beim selektiven Laserschmelzen wird der metallische Aufbauwerkstoff in Pulverform in einer dünnen Schicht auf eine Platte aufgebracht. Der pulverförmige Werkstoff wird mittels Strahlung an den jeweils gewünschten Stellen lokal vollständig aufgeschmolzen und bildet nach der Erstarrung eine feste Materialschicht. Anschließend wird diese Grundplatte um den Betrag einer Schichtdicke abgesenkt und es wird erneut Pulver aufgetragen. Dieser Zyklus wird solange wiederholt, bis alle Schichten aufgeschmolzen sind. Die fertige Schaufelanordnung wird vom überschüssigen Pulver gereinigt.

Als Strahlung kann beispielsweise ein Laserstrahl zum Einsatz kommen, welcher die Schaufelanordnung aus den einzelnen Pulverschichten generiert. Die Daten zur Führung des Laserstrahls werden auf Grundlage eines 3D-CAD-Körpers mittels einer Software erzeugt. Alternativ zu einem selektiven Laserschmelzen kann auch ein Elektronenstrahl (EBM) zum Einsatz kommen.

In einer besonders vorteilhaften Variante der Erfindung wird die Fluidkontaktfläche der Schaufelanordnung aus einem Aufbaumaterial durch aufeinanderfolgendes Schmelzen und Erstarren von Schichten mittels Strahlung hergestellt. Die unterschiedlichen Eigenschaften der Bereiche einer Zelleinheit werden dabei durch Variationen der Strahlung generiert. Durch gezielte Steuerung der lokalen Wärmeeinbringung wird bereits beim Bau der Schaufelanordnung eine Modifizierung der Werkstoffeigenschaften vorgenommen. Dadurch gelingt es, in einem Bereich der Wände und der Zelleinheiten Zonen und Gefüge unterschiedlicher Werkstoffzustände eines chemisch-homogenen Werkstoffs und damit unterschiedlicher Eigenschaften zu erzeugen.

Die Schaufelanordnung kann in einer Variante der Erfindung aus unterschiedlichem Aufbaumaterial gebildet werden. Das Aufbaumaterial umfasst vorzugsweise metallische Pulverteilchen, insbesondere niedriglegierte und/oder hochlegierte Stahlpulverteilchen und/oder schmelzfähigen Kunststoff und/oder einen Metall-Polymer-Hybridwerkstoff.

Vorzugsweise handelt es sich bei dem Aufbaumaterial zur Herstellung der Fluidkontaktfläche, insbesondere der Strömungskontur der Schaufelanordnung, um metallische Pulverteilchen. Bei einer Variante der Erfindung werden dazu eisenhaltige und/oder cobaldhaltige Pulverpartikel eingesetzt. Diese können Zusätze wie beispielsweise Chrom, Molybdän oder Nickel enthalten. Die Schaufelanordnung ist dadurch besonders abrasions- und korrosionsbeständig ausgebildet.

Erfindungsgemäß werden die Zelleinheiten der Schaufelanordnung in einem additiven Fertigungsverfahren gebildet. Die 3D-Form der Wände und der Zelleinheiten sind in einer Software als Datensatz hinterlegt. An den Stellen, an denen die Wände ausgebildet werden sollen, können Werkzeuge unterschiedlicher additiver Verfahren wirken und Schicht für Schicht additiv ausbilden. Vorteilhafterweise kann für jede Schicht nacheinander oder gleichzeitig der geeignete Aufbauprozess für jedes Aufbaumaterial ausgeführt werden, so dass eine komplexe Schaufelanordnung aus unterschiedlichen Werkstoffen entsteht, deren Zelleinheiten optimal und auch individuell an die Anforderungen des späteren Einsatzes angepasst sind.

In einer Variante der Erfindung wird die Wabenstruktur mit einem Schmelzschicht-Werkzeug des additiven Fertigungsverfahrens erzeugt, bei dem aus schmelzfähigem Kunststoff ein Raster von Punkten auf eine Fläche aufgetragen wird. Durch Extrudieren mittels einer Düse sowie einer anschließenden Erhärtung durch Abkühlung an der gewünschten Position wird ein tragfähiger Aufbau, insbesondere in Form von Zelleinheiten und/oder in Form einer Wabenstruktur, erzeugt. Indem der stützende Bereich einer Schaufelanordnung hohlraumbildend mit besonders tragfähiger Struktur erzeugt wird, weist eine Schaufelanordnung eine enorme Festigkeit bei gleichzeitig sehr geringer Masse auf. Der Aufbau einer Schaufelanordnung erfolgt üblicherweise, indem wiederholt jeweils zeilenweise eine Arbeitsebene abgefahren und dann die Arbeitsebene stapelnd nach oben verschoben wird, sodass der stützende Bereich einer Schaufelanordnung entsteht.

Gemäß der Erfindung weisen die Wände eine Dicke von weniger als 3 mm, vorzugsweise weniger als 2 mm, insbesondere weniger als 1 mm, auf. Vorteilhafterweise sind die Wände besonders dünn ausgebildet, wodurch der Effekt der Leichtbau-Konstruktion nochmals verstärkt wird.

Um eine besonders stabile Schaufelanordnung bei möglichst geringer Masse zu erzielen, sind innerhalb der Zelleinheiten und/oder zwischen benachbarten Zelleinheiten Verstärkungsrippen angeordnet. Idealerweise können die Wände besonders dünn und die Schaufelanordnung möglichst leicht ausgestaltet sein, wobei die Stabilität durch exakt platzierte Verstärkungsrippen optimal realisiert ist.

Vorzugsweise sind die Zelleinheiten, insbesondere der Trag- und der Deckscheibe, radial und/oder in Umfangsrichtung ausgerichtet. Diese Art der Anordnung und Ausrichtung unterstützt die Reduktion der Anzahl an Wänden, wodurch das Laufrad oder die Leiteinrichtung besonders leicht ausgebildet werden kann.

Erfindungsgemäß bilden die Außenwände der Zelleinheiten die Fluidkontaktfläche der Schaufelanordnung. Diese sind durch eine CFD-Simulation optimal an die Verwendungsanforderungen angepasst und durch die generative Fertigung individuell sowie schnell zu produzieren.

Vorteilhafterweise sind die Wände und/oder die Verstärkungsrippen aus einem metallischen Werkstoff erzeugt, der Legierungsbestandteile aufweisen kann, so dass eine Leichtbau-Schaufelanordnung mit besonders abrasions- und korrosionsbeständigen Eigenschaften ausgebildet werden kann. Alternativ können auch Kunststoffe oder keramische Werkstoffe eingesetzt werden.

Bei einer Variante der Erfindung werden die Wände und/oder die Verstärkungsrippen aus einer Werkstoffkombination erzeugt und somit als Hybridwerkstoff ausgebildet. In einer alternativen Variante der Erfindung sind die Hohlräume der Zelleinheiten mit einem Füllstoff ausgefüllt. Vorzugsweise ist der Füllstoff als leichter Kunststoff ausgeführt, so dass sich die Stabilität der Schaufelanordnung erhöht und gleichzeitig die Masse der Schaufelanordnung gering bleibt.

Gemäß der Erfindung kann die Schaufelanordnung, die als Laufrad ausgeführt ist, eine Deckscheibe umfassen, die aus Zelleinheiten gebildet ist. Diese Zelleinheiten bestehen aus Wänden, die Hohlräume umschließen. Vorteilhafterweise ist dadurch das komplette Laufrad als Leichtbau-Konstruktion ausgebildet, wodurch das Laufrad eine enorme Stabilität bei sehr geringer Masse aufweist.

Idealerweise ist aufgrund der Leichtbau-Konstruktion der Schaufelanordnung die sogenannte Druckzeit der additiven Fertigung äußerst gering. Dadurch wird die generative Herstellung der Schaufelanordnung besonders ökonomisch interessant und im Vergleich zu Herstellung mittels Gießens deutlich konkurrenzfähiger.

Darüber hinaus ist die individuelle Gestaltung der Schaufelgeometrie, der Strömungskontur und der Anordnung der Verstärkungsrippen besonders vorteilhaft. Im Vergleich zu einem Gusslaufrad muss keine Nacharbeit zur Anpassung an kundenspezifische Anforderungen oder eine anlagenspezifische Anpassung an die Schaufelanordnung vorgenommen werden. Die Schaufelanordnung kann optimiert an den Verwendungszweck konstruiert und individuell gefertigt werden, ohne dass die Kosten für eine individuelle Gussform inklusive aufwendiger Nacharbeit entstehen.

Gemäß der Erfindung kann vorzugsweise auf eine Lagerhaltung einer Vielzahl von Laufrädern bzw. Leiteinrichtungen verzichtet werden. Die vorhandenen Konstruktionsdaten eines Laufrads bzw. einer Leiteinrichtung können bei Bedarf zur direkten generativen Nachfertigung eingesetzt werden, wodurch die mittelbaren Kosten der Lagerhaltung entfallen.

Idealerweise kann durch die Leichtbau-Konstruktion einer Schaufelanordnung aus Zelleinheiten ein interessanter Prototyp in einer enorm kurzen Zeitspanne realisiert und in Testanlagen getestet werden. Dadurch lässt sich die Entwicklungszeit neuer Laufräder bzw. Leiteinrichtungen vorteilhaft verkürzen.

Erfindungsgemäß kann die Schaufelanordnung in Leichtbau-Konstruktion für Anwendungen verwendet werden, bei denen leichte und nicht träge Schaufelanordnungen ganz neue Einsatzperspektiven eröffnen. Vorzugsweise eignet sich die erfindungsgemäße Schaufelanordnung für die Verwendung in Strömungspumpen bei Mikrodosieranwendungen.

Weitere Merkmale und Vorteile der Erfindung ergeben sich aus der Beschreibung von Ausführungsbeispielen anhand der Zeichnungen und aus den Zeichnungen selbst.

Dabei zeigt:
- Fig. 1: einen mittigen Schnitt der erfindungsgemäßen Schaufelanordnung,
- Fig. 2: eine Schnittdarstellung der Schaufeln,
- Fig. 3: eine Darstellung der Querschnittsfläche einer Trägereinheit.

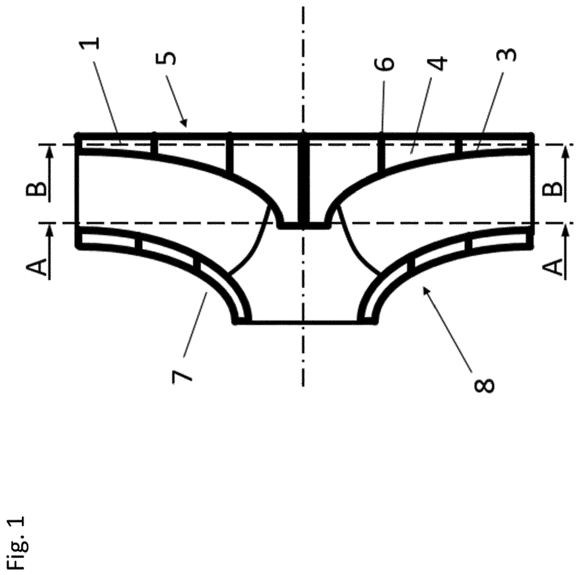

In der Fig. 1 ist ein mittiger Schnitt durch die erfindungsgemäße Schaufelanordnung 8 dargestellt, die in diesem Ausführungsbeispiel als Laufrad ausgebildet ist. Die Trägereinheit 1 und die Deckscheibe 7 weisen Zelleinheiten 5 auf, die Hohlräume 4 umschließen. Die Zelleinheiten 5 werden von Wänden 3 gebildet, an denen teilweise Verstärkungsrippen 6 angeordnet sind.

In diesem Ausführungsbeispiel sind die Wände 3 generativ aus korrosionsbeständigen Legierungspartikeln erzeugt, die mittels Energieeintrag durch Strahlung modifiziert ausgebildet sind. Dadurch sind die Oberflächen des Laufrades besonders abrasionsbeständig ausgeführt. Das Laufrad ist vollständig aus Zelleinheiten 5 in Form von Hohlraumsegmenten aufgebaut. Somit ist das Laufrad besonders leicht und im Betriebsverhalten nicht träge.

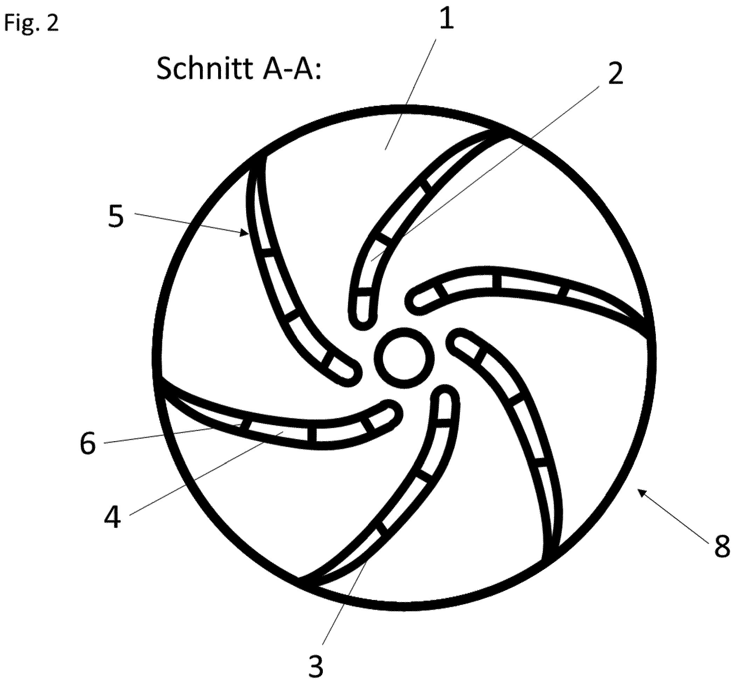

Fig. 2 zeigt einen Schnitt der Schaufeln 2 der Schaufelanordnung 8, die in diesem Ausführungsbeispiel als Laufrad ausgeführt ist. Die Schaufeln 2 weisen Zelleinheiten 5 auf, die Hohlräume 4 umschließen. Die Zelleinheiten 5 werden von Wänden 3 gebildet. An besonders beanspruchten Stellen des Laufrads sind an den Wänden 3 Verstärkungsrippen 6 angeordnet. Die Wände 3 der Schaufeln 2 sind in diesem Ausführungsbeispiel besonders strömungsoptimiert ausgebildet und weisen eine Dicke von weniger als 3 mm, vorzugsweise weniger als 2 mm, insbesondere weniger als 1 mm, auf. Das Laufrad mit den Schaufeln 2 ist dadurch besonders leicht ausgeführt. Dabei teilen sich benachbarte Zelleinheiten 5 gemeinsam Wände 3, wodurch die Wände 3 der Schaufeln 2 und der Trägereinheit 1 insgesamt einstückig ausgebildet sind.

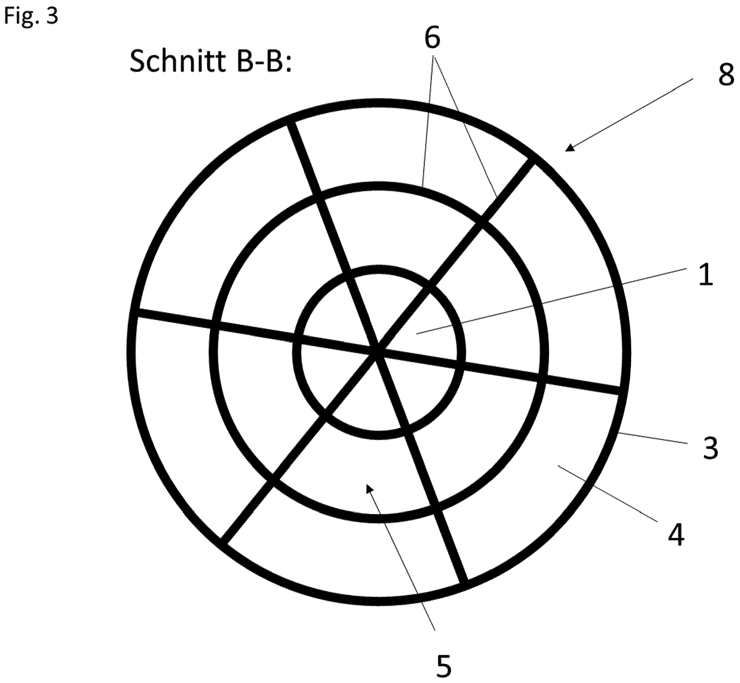

In Fig. 3 ist ein Schnitt der Trägereinheit 1 einer Schaufelanordnung 8 dargestellt. Die Trägereinheit 1 weist Zelleinheiten 5 auf, die Hohlräume 4 umschließen. Die Zelleinheiten 5 werden aus Wänden 3 gebildet, an die teilweise Verstärkungsrippen 6 angeordnet sind. Dabei sind die Zelleinheiten 5 radial und in Umfangsrichtung ausgerichtet.

## Patentansprüche

1. Kreiselpumpe mit einer Schaufelanordnung (8), wobei die Schaufelanordnung (8) eine Trägereinheit (1) aufweist, auf der Schaufeln (2) angeordnet sind,
**dadurch gekennzeichnet,**
**dass** die Schaufelanordnung (8) Zelleinheiten (5) aufweist, die Hohlräume (4) umschließen, wobei die Zelleinheiten (5) von Wänden (3) gebildet werden und die Wände (3) der Zelleinheiten (5) die Hohlräume (4) vollständig umschließen, wobei die Trägereinheit (1) und die Schaufeln (2) Zelleinheiten (5) aufweisen, die Hohlräume (4) umschließen.

2. Kreiselpumpe nach Anspruch 1, **dadurch gekennzeichnet, dass** Zelleinheiten (5) unmittelbar nebeneinander angeordnet sind.

3. Kreiselpumpe nach Anspruch 1 oder 2, **dadurch gekennzeichnet, dass** unmittelbar nebeneinander angeordnete Zelleinheiten (5) Wände (3) teilen.

4. Kreiselpumpe nach einem der Ansprüche 1 bis 3, **dadurch gekennzeichnet, dass** die Zelleinheiten (5) eine wabenartige Struktur bilden.

5. Kreiselpumpe nach einem der Ansprüche 1 bis 4, **dadurch gekennzeichnet, dass** alle Wände (3) der Zelleinheiten (5) von Trägereinheit (1) und Schaufeln (2) einstückig ausgebildet sind.

6. Kreiselpumpe nach einem der Ansprüche 1 bis 5, **dadurch gekennzeichnet, dass** alle Wände (3) der Zelleinheiten (5) von Trägereinheit (1) und Schaufeln (2) mehrstückig und/oder in Hybridbauweise ausgebildet sind.

7. Kreiselpumpe nach einem der Ansprüche 1 bis 6, **dadurch gekennzeichnet, dass** die Wände (3) eine Dicke von weniger als 3 mm, vorzugsweise weniger als 2 mm, insbesondere weniger als 1 mm, aufweisen.

8. Kreiselpumpe nach einem der Ansprüche 1 bis 7, **dadurch gekennzeichnet, dass** innerhalb der Zelleinheiten (5) und/oder zwischen benachbarten Zelleinheiten (5) Verstärkungsrippen (6) angeordnet sind.

9. Kreiselpumpe nach einem der Ansprüche 1 bis 8, **dadurch gekennzeichnet, dass** die Zelleneinheiten (5) radial und/oder in Umfangsrichtung ausgerichtet sind.

10. Kreiselpumpe nach einem der Ansprüche 1 bis 9, **dadurch gekennzeichnet, dass** die Wände (3) der Zelleinheiten (5) die Fluidkontaktfläche der Schaufelanordnung (8) bilden.

11. Kreiselpumpe nach einem der Ansprüche 1 bis 10, **dadurch gekennzeichnet, dass** die Wände (3) und/oder die Verstärkungsrippen (6) aus einem metallischen Werkstoff erzeugt sind

12. Kreiselpumpe nach einem der Ansprüche 1 bis 11, **dadurch gekennzeichnet, dass** die Wände (3) und/oder die Verstärkungsrippen (6) aus einer Werkstoffkombination erzeugt sind.

13. Kreiselpumpe nach einem der Ansprüche 1 bis 12, **dadurch gekennzeichnet, dass** die Hohlräume (4) der Zelleinheiten (5) mit einem Material zumindest teilweise ausgefüllt sind.

14. Kreiselpumpe nach einem der Ansprüche 1 bis 13, **dadurch gekennzeichnet, dass** die Schaufelanordnung (8) eine Deckscheibe (7) umfasst, wobei die Deckscheibe (7) Zelleinheiten (5) mit Hohlräumen (4) aufweist, die von Wänden (3) umschlossen sind.

15. Verfahren zur Herstellung einer Kreiselpumpe mit einer Schaufelanordnung (8) gemäß einem der Ansprüche 1 bis 14, mittels einer integrativen Fertigungseinheit mit folgenden Schritten:
• Ausbilden von Zelleinheiten (5) aus einem Aufbaumaterial,
• Selektives Einwirken von Energie in Form von Strahlung, Temperatur und Druck zur Gestaltung der Wände (3) und/oder Verstärkungsrippen (6),
• Gezielte Variation der Energieeinwirkung zur Erzeugung von Wänden (3) und Verstärkungsrippen (6) mit definierten Eigenschaften,
• Gezielte Variation der Dicke der Wände (3) zur Anpassung an die Belastungsanforderungen.

16. Verwendung einer Kreiselpumpe mit einer Schaufelanordnung (8) nach einem der Ansprüche 1 bis 14 als Mikrodosierpumpe.

## Claims

1. Centrifugal pump having a blade arrangement (8), wherein the blade arrangement (8) has a carrier unit (1) on which blades (2) are arranged,
**characterized**
**in that** the blade arrangement (8) has cell units (5) that enclose cavities (4), the cell units (5) being formed by walls (3) and the walls (3) of the cell units (5) completely enclosing the cavities (4), wherein the carrier unit (1) and the blades (2) have cell units (5) that enclose cavities (4).

2. Centrifugal pump according to Claim 1, **characterized in that** cell units (5) are arranged directly next to one another.

3. Centrifugal pump according to Claim 1 or 2, **characterized in that** cell units (5) arranged directly next to one another share walls (3).

4. Centrifugal pump according to one of Claims 1 to 3, **characterized in that** the cell units (5) form a honeycomb structure.

5. Centrifugal pump according to one of Claims 1 to 4, **characterized in that** all the walls (3) of the cell units (5) are formed in one piece by the carrier unit (1) and the blades (2).

6. Centrifugal pump according to one of Claims 1 to 5, **characterized in that** all the walls (3) of the cell units (5) are formed in multiple parts and/or in a hybrid construction by the carrier unit (1) and the blades (2).

7. Centrifugal pump according to one of Claims 1 to 6, **characterized in that** the walls (3) have a thickness of less than 3 mm, preferably less than 2 mm, in particular less than 1 mm.

8. Centrifugal pump according to one of Claims 1 to 7, **characterized in that** reinforcing ribs (6) are arranged inside the cell units (5) and/or between adjacent cell units (5).

9. Centrifugal pump according to one of Claims 1 to 8, **characterized in that** the cell units (5) are aligned radially and/or in the circumferential direction.

10. Centrifugal pump according to one of Claims 1 to 9, **characterized in that** the walls (3) of the cell units (5) form the fluid contact surface of the blade arrangement (8).

11. Centrifugal pump according to one of Claims 1 to 10, **characterized in that** the walls (3) and/or the reinforcing ribs (6) are made of a metal material.

12. Centrifugal pump according to one of Claims 1 to 11, **characterized in that** the walls (3) and/or the reinforcing ribs (6) are made of a combination of materials.

13. Centrifugal pump according to one of Claims 1 to 12, **characterized in that** the cavities (4) of the cell units (5) are at least partially filled with a material.

14. Centrifugal pump according to one of Claims 1 to 13, **characterized in that** the blade arrangement (8) comprises a front shroud (7), the front shroud (7) having cell units (5) with cavities (4) enclosed by walls (3).

15. Method for producing a centrifugal pump having a blade arrangement (8) according to one of Claims 1 to 14, by means of an integrative manufacturing unit, having the following steps:
• forming cell units (5) from a building material,
• selectively applying energy in the form of radiation, heat and pressure for configuration of the walls (3) and/or reinforcing ribs (6),
• controlled variation of the application of energy for creation of walls (3) and reinforcing ribs (6) with defined properties,
• controlled variation of the thickness of the walls (3) for adaptation to the load requirements.

16. Use of a centrifugal pump having a blade arrangement (8) according to one of Claims 1 to 14 as a micro-dosing pump.

## Revendications

1. Pompe centrifuge comportant un système d'aubes (8), le système d'aubes (8) présentant une unité support (1) sur laquelle sont disposées des aubes (2),
**caractérisée**
**en ce que** le système d'aubes (8) présente des unités cellulaires (5), qui entourent des espaces creux (4), les unités cellulaires (5) étant formées par des parois (3) et les parois (3) des unités cellulaires (5) entourant complètement les espaces creux (4), l'unité support (1) et les aubes (2) présentant des unités cellulaires (5) qui entourent les espaces creux (4).

2. Pompe centrifuge selon la revendication 1, **caractérisée en ce que** les unités cellulaires (5) sont agencées directement les unes à côté des autres.

3. Pompe centrifuge selon la revendication 1 ou 2, **caractérisée en ce que** les unités cellulaires (5) agencées directement les unes à côté des autres partagent des parois (3).

4. Pompe centrifuge selon l'une des revendications 1 à 3, **caractérisée en ce que** les unités cellulaires (5) forment une structure alvéolée.

5. Pompe centrifuge selon l'une des revendications 1 à 4, **caractérisée en ce que** toutes les parois (3) des unités cellulaires (5) de l'unité support (1) et des aubes (2) sont réalisées d'une seule pièce.

6. Pompe centrifuge selon l'une des revendications 1 à 5, **caractérisée en ce que** toutes les parois (3) des unités cellulaires (5) de l'unité support (1) et des aubes (2) sont constituées de plusieurs pièces et/ou de conception hybride.

7. Pompe centrifuge selon l'une des revendications 1 à 6, **caractérisée en ce que** les parois (3) présentent une épaisseur inférieure à 3 mm, de préférence inférieure à 2 mm, en particulier inférieure à 1 mm.

8. Pompe centrifuge selon l'une des revendications 1 à 7, **caractérisée en ce que** des nervures de renforcement (6) sont agencées dans les unités cellulaires (5) et/ou entre des unités cellulaires (5) adjacentes.

9. Pompe centrifuge selon l'une des revendications 1 à 8, **caractérisée en ce que** les unités cellulaires (5) sont orientées de manière radiale et/ou dans la direction périphérique.

10. Pompe centrifuge selon l'une des revendications 1 à 9, **caractérisée en ce que** les parois (3) des unités cellulaires (5) forment la surface de contact avec un fluide du système d'aubes (8).

11. Pompe centrifuge selon l'une des revendications 1 à 10, **caractérisée en ce que** les parois (3) et/ou les nervures de renforcement (6) sont fabriquées en un matériau métallique.

12. Pompe centrifuge selon l'une des revendications 1 à 11, **caractérisée en ce que** les parois (3) et/ou les nervures de renforcement (6) sont fabriquées en une combinaison de matériaux.

13. Pompe centrifuge selon l'une des revendications 1 à 12, **caractérisée en ce que** les espaces creux (4) des unités cellulaires (5) sont au moins partiellement remplis d'un matériau.

14. Pompe centrifuge selon l'une des revendications 1 à 13, **caractérisée en ce que** le système d'aubes (8) comprend un disque de recouvrement (7), le disque de recouvrement (7) présentant des unités cellulaires (5) comportant des espaces creux (4) qui sont entourés par des parois (3).

15. Procédé de fabrication d'une pompe centrifuge comportant un système d'aubes (8) selon l'une des revendications 1 à 14 au moyen d'une unité de fabrication intégrative, comportant les étapes suivantes :
• formation d'unités cellulaires (5) en un matériau constitutif,
• action sélective d'énergie sous forme de rayonnement, de température et de pression pour la conception des parois (3) et/ou des rainures de renforcement (6),
• variation ciblée de l'action d'énergie pour la génération de parois (3) et de rainures de renforcement (6) présentant des propriétés définies,
• variation ciblée de l'épaisseur des parois (3) pour l'adaptation aux exigences de sollicitation.

16. Utilisation d'une pompe centrifuge comportant un système d'aubes (8) selon l'une des revendications 1 à 14 en tant que pompe de microdosage.
